# EUROPEAN PATENT APPLICATION

(11) **EP 4 538 136 A1**
(43) Date of publication of application: **16.04.2025**
(21) Application number: 23831388.6
(22) Date of filing: 26.06.2023
(51) Int. Cl.: B60W 50/10, B60N 2/75, B60N 3/00, B60W 30/10, B60W 40/02, G08G 1/16

(54) **MOBILE BODY**

(30) Priority: 29.06.2022 JP 2022104888
(71) Applicant: HONDA MOTOR CO., LTD., Minato-ku Tokyo 107-8556 (JP)
(72) Inventor: AIZAWA, Koki, Wako-shi, Saitama 351-0193 (JP); WAKAYAMA, Ryoji, Wako-shi, Saitama 351-0193 (JP); SHIRAKATA, Kento, Wako-shi, Saitama 351-0193 (JP); MATSUNAGA, Hideki, Wako-shi, Saitama 351-0193 (JP)
(74) Representative: Kiwit, Benedikt
(86) International application number: PCT/JP2023/023613
(87) International publication number: WO 2024/004948

(57) **Abstract**

Provided is a mobile body allowing an occupant to board, including a drive device configured to move the mobile body, a control device configured to control the drive device, a detection device configured to acquire at least a situation on a side in a traveling direction of the mobile body, and a first operating element provided on an armrest of the mobile body, in which, in response to an operation made on the first operating element indicating either the left or right, the control device is configured to control the drive device so as to automatically generate a target trajectory of the mobile body to change the traveling direction based on a situation on a side in the traveling direction and so as to cause the mobile body to move along the target trajectory.

## Description

### TECHNICAL FIELD

The present invention relates to a mobile body.

### BACKGROUND ART

In recent years, efforts have become active to provide access to a sustainable transportation system in which individuals in vulnerable positions among traffic participants are taken into account. To achieve this, research and development has been focused on further improvement in safety and convenience of transportation through research and development of an autonomous driving technology. For example, autonomous driving and advanced driver assistance based on results of sensing a side in a traveling direction of a mobile body have been put into practical use. These technologies may include: a form in which a traveling direction of a mobile body is controlled by a control device of the mobile body; and a form in which at least a rough traveling direction is determined by accepting some operation from an occupant. Also, in recent years, a mobile body referred to as single-seater or two-seater micromobility has also been put into practical use (Patent Document 1).

### Citation List

### Patent Document

Patent Document 1: Japanese Unexamined Patent Application, First Publication No. 2019-197328

### SUMMARY OF INVENTION

### Technical Problem

**In** the conventional technology, there have been cases in which it is not possible for an occupant to perform an operation of specifying a traveling direction in a comfortable posture.

The present invention has been made in consideration of such circumstances, and an objective of the present invention is to provide a mobile body that allows an occupant to perform an operation of specifying a traveling direction in a comfortable posture. Furthermore, this contributes to development of a sustainable transportation system.

### Solution to Problem

A mobile body according to the present invention employs the following configuration.
(1) A mobile body according to one aspect of this invention is a mobile body that allows an occupant to board and includes a drive device configured to move the mobile body, a control device configured to control the drive device, a detection device configured to acquire at least a situation on a side in a traveling direction of the mobile body, and a first operating element provided on an armrest of the mobile body, wherein in response to an operation made on the first operating element indicating either the left or right, the control device is configured to control the drive device so as to automatically generate a target trajectory of the mobile body to change the traveling direction based on a situation on a side in the traveling direction and so as to cause the mobile body to move along the target trajectory.
(2) **In** the above-described aspect (1), as a target trajectory of changing a traveling direction of the mobile body, the control device may be configured to generate a target trajectory of causing the mobile body to turn right or left or change a lane.
(3) **In** the above-described aspect (1), the first operating element may be provided on an armrest placed on an inner side of a door provided on a side surface of the mobile body.
(4) **In** the above-described aspect (3), of two doors provided on left and right side surfaces of the mobile body, the first operating element may be provided on the armrest placed on an inner side of a door on a side opposite to a side along which the mobile body is legally determined to travel.
(5) In the above-described aspect (3), the first operating element may be provided at a position that does not overlap an opening/closing operating element configured to open and close the door in a side view.
(6) The above-described aspect (1) may include two seats aligned in a direction intersecting a traveling direction of the mobile body, in which the armrest may be provided between the two seats.
(7) The above-described aspect (1) may further include a second operating element configured to manually operate a traveling direction of the mobile body, in which the first operating element may be provided behind the second operating element in a traveling direction of the mobile body.

### Advantageous Effects of Invention

According to the aspects (1) to (7), an occupant is allowed to perform an operation of specifying a traveling direction in a comfortable posture.

### BRIEF DESCRIPTION OF DRAWINGS

[FIG. 1] A diagram showing an example of a configuration of a mobile body.
[FIG. 2] A perspective view of a mobile body according to a first embodiment from above.
[FIG. 3] A view from the inside of the mobile body showing a right door in an open state.
[FIG. 4] A view showing an example of an image captured by an external camera of an external environment detection device.
[FIG. 5] A view showing a target trajectory before and after a first operating element is operated.
[FIG. 6] A perspective view of a mobile body of a second embodiment from above.

### DESCRIPTION OF EMBODIMENTS

Hereinafter, a mobile body of the present invention will be described with reference to the drawings. A mobile body is a vehicle that allows an occupant to board and may be referred to as micromobility in some cases. The mobile body may be capable of traveling not only on roads but also on sidewalks. In that case, different speed limits may be applied on a road and on a sidewalk, and when the mobile body is traveling on a sidewalk, this fact may be notified to the outside by some means, but description of such a case will be omitted in the present specification, and description will focus only on a case in which the mobile body travels on a road.

### <First Embodiment>

### [Configuration]

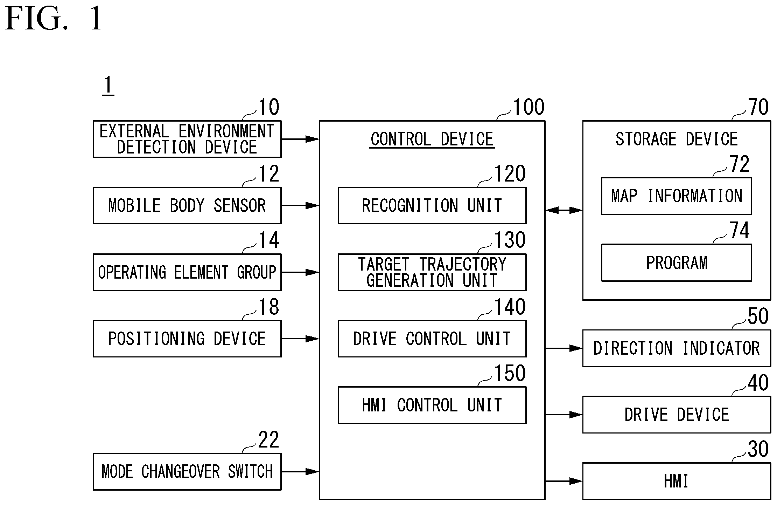

FIG. 1 is a diagram showing an example of a configuration of a mobile body 1. The mobile body 1 is equipped with, for example, an external environment detection device 10, a mobile body sensor 12, an operating element group 14, a positioning device 18, a mode changeover switch 22, an HMI 30, a drive device 40, a direction indicator 50, a storage device 70, and a control device 100. Note that, among these configurations, some of configurations that are not essential for realizing functions of the present invention may be omitted.

The external environment detection device 10 is a device of various types for acquiring at least a situation on a side in a traveling direction of the mobile body 1. The external environment detection device 10 is an example of a detection device. The external environment detection device 10 includes, for example, an external camera. The external environment detection device 10 may include a radar device, a light detection and ranging (LIDAR), a sensor fusion device, or the like. The external environment detection device 10 outputs information indicating detection results (such as images and positions of objects) to the control device 100.

The mobile body sensor 12 includes, for example, a speed sensor, an acceleration sensor, a yaw rate (angular velocity) sensor, an orientation sensor, an operation amount detection sensor attached to operating elements of various types included in the operating element group 14, and the like.

The positioning device 18 is a device configured to determine a position of the mobile body 1. The positioning device 18 is, for example, a global navigation satellite system (GNSS) receiver, determines a position of the mobile body 1 in accordance with signals received from GNSS satellites, and outputs the position as position information. Note that, the position information of the mobile body 1 may also be estimated from a position of a Wi-Fi base station to which a communication device to be described later is connected.

The mode changeover switch 22 is a switch operated by an occupant. The mode changeover switch 22 may be a mechanical switch or a graphical user interface (GUI) switch set on a touch panel. The mode changeover switch 22 is a switch that instructs switching of an operation mode. The operation mode that can be executed by the mobile body 1 includes at least a mode A in which acceleration and deceleration are automatically controlled and steering is controlled based on a simple operation on a first operating element OP1 to be described later. In addition, the operation mode may include a mode B in which acceleration and deceleration are automatically controlled and steering is controlled based on an operation of a second operating element OP2. The operation mode may also include a modified operation mode in which acceleration and deceleration in each of the modes A and B are controlled based on a manual operation. In the following description, only the modes A and B will be described.

The HMI 30 is provided in the interior of the mobile body (which typically refers to a closed space for accommodating occupants, but if the mobile body 1 is in a form of a convertible, it refers to a space surrounding seats). The HMI 30 includes, for example, a display device, a speaker, a touch panel, and the like.

The drive device 40 is a device configured to move the mobile body 1 on a road. The drive device 40 includes, for example, a group of wheels consisting of steering wheels and drive wheels, a motor that drives the drive wheels, a battery that stores power to be supplied to the motor, a steering device that adjusts a steering angle of the steering wheels, and the like. The drive device 40 may include an internal combustion engine, a fuel cell, or the like as a drive force output means or a power generation means. Also, the drive device 40 may further include a braking device that utilizes a frictional force or air resistance.

The direction indicator 50 is provided on an outer plate portion of the mobile body 1 and notifies the outside of the mobile body 1 of a change in a course of the mobile body 1 by a blinking operation of a lamp.

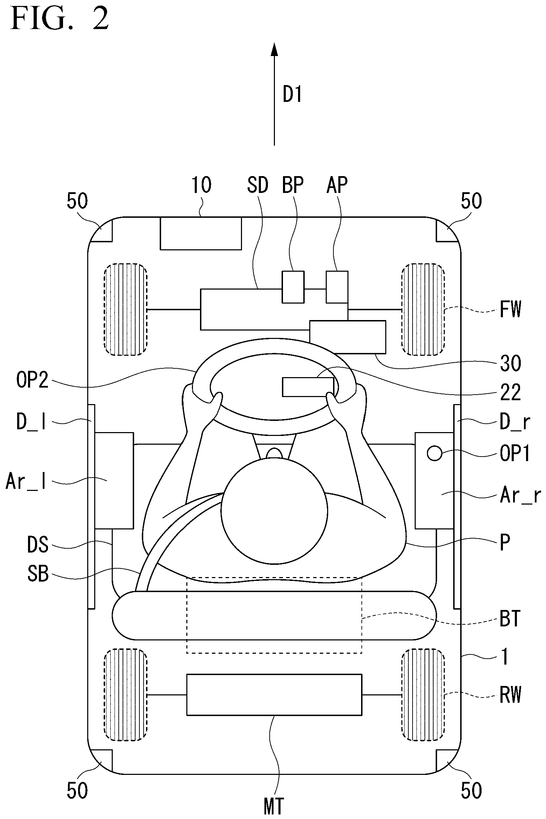

FIG. 2 is a perspective view of the mobile body 1 according to the first embodiment from above. In the drawings, FW is a steering wheel, RW is a drive wheel, SD is a steering device, MT is a motor, and BT is a battery. The steering device SD, the motor MT, and the battery BT are included in the drive device 40. Also, AP is an accelerator pedal, and BP is a brake pedal, both of which are included in the operating element group 14. If acceleration and deceleration are always controlled automatically, at least the accelerator pedal AP may be omitted. The mobile body 1 shown in the drawings is a single-seater mobile body, and an occupant P is seated on a driver's seat DS and is wearing a seat belt SB. An arrow D1 indicates a traveling direction (velocity vector) of the mobile body 1. The external environment detection device 10 is provided in the vicinity of a front end part of the mobile body 1, and the mode changeover switch 22 is provided at a boss portion of the steering wheel WH. Also, the direction indicator 50 is provided at four corners of the mobile body 1.

### [First Operating Element]

For example, a left door D_l and a right door D_r, are provided in the mobile body 1 to allow the occupant to get in and out from either the left or right side. A left armrest Ar_l is provided on an inner side of the left door D_l, and a right armrest Ar_r is provided on an inner side of the right door D_r. Of these, the first operating element OP1 is provided on the right armrest Ar_r. This disposition is for a case in which a destination of the mobile body 1 is a country or region with left-hand traffic. If the destination of the mobile body 1 is a country or region with right-hand traffic, the first operating element OP1 is provided on the left armrest Ar_l. Such a disposition is based on an assumption that, in a case of getting in or out of the mobile body 1 in a country or region with left-hand traffic, the occupant will often get in and out from a sidewalk side, that is, a left side, when the mobile body 1 is stopped at a left edge of the road. If the first operating element OP1 is provided on a door on a side where the occupant P gets in and out, there is a likelihood that the first operating element OP1 may get caught on a body or clothes at the time of getting in and out, and therefore the first operating element OP1 is provided on the right armrest Ar_r that is provided on the right door D_r which is used less frequently for getting in and out. In a case of right-hand traffic, the opposite applies. That is, of the two doors provided on left and right side surfaces of the mobile body 1, the armrest on which the first operating element OP1 is provided is placed on an inner side of the door on a side opposite to a side along which the mobile body 1 is legally determined to travel.

The first operating element OP1, for example, accepts a discrete operation (referring to an operation in which there are only two states such as an ON operation or an OFF operation for a certain instruction). The first operating element OP1 has a form of a joystick, a directional pad, or the like. In the present invention, the first operating element OP1 only needs to be operable at least in the left-right direction. If the first operating element OP1 is a joystick, when it is operated to either the left or right by more than a predetermined amount, the operation amount detection sensor attached to the first operating element OP1 outputs a signal to the control device 100 indicating that it has been "operated to either the left or right".

The second operating element OP2 may be provided on a front side of the occupant P in the mobile body 1. The second operating element OP2 has a form of a so-called steering wheel (not limited to a wheel shaped one, but may be a steering wheel with a deformed shape) and is used to manually operate the traveling direction (steering angle) of the mobile body 1. The second operating element OP2, for example, accepts continuous operations. A rotation angle sensor and/or a torque sensor are attached to the second operating element OP2 as the operation amount detection sensor, and these sensors detect an amount of operation (or a force of operation) performed by the occupant P and output it to the control device 100.

The first operating element OP1 is provided behind the second operating element OP2 in a traveling direction D1 of the mobile body 1. This is because it is assumed that the occupant P will be in a relaxed posture because the driving control of the mobile body 1 based on the operation of the first operating element OP1 is performed in a state closer to automatic driving (high degree of driver assistance). On the other hand, when the second operating element OP2 is operated, at least the steering is performed manually, and therefore it is assumed that the occupant P will be in a more forward-leaning position than that described above. When such a disposition is employed, driving operations can be appropriately accommodated according to a state of the occupant P.

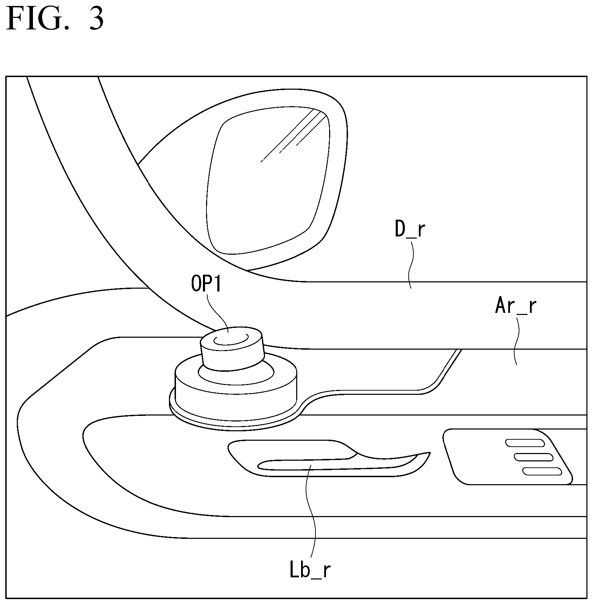

Also, an opening/closing operating element configured to perform an opening/closing operation is provided in the left door D_l and the right door D_r. FIG. 3 is a view from the inside of the mobile body 1 showing the right door D_r in an open state. In the drawings, Lb_r is a right opening/closing operating element. The first operating element OP1 is provided at a position that does not overlap the right opening/closing operating element Lb_r in a side view. Therefore, a situation in which the occupant P unintentionally operates the right opening/closing operating element Lb_r by mistake can be made difficult to occur. Also, a situation in which the occupant P unintentionally operates the first operating element OP1 by mistake can be made difficult to occur when operating the right opening/closing operating element Lb_r.

Returning to FIG. 1, the storage device 70 is a non-transitory storage device such as, for example, a hard disk drive (HDD), a flash memory, or a random access memory (RAM). The storage device 70 stores map information 72, a program 74 executed by the control device 100, and the like. In the drawings, the storage device 70 is shown outside a frame of the control device 100, but the storage device 70 may be included in the control device 100. Also, the storage device 70 may be provided on a server (not shown in the drawings). Note that, the map information 72 may not necessarily be present.

### [Control Device]

The control device 100 includes, for example, a recognition unit 120, a target-trajectory generation unit 130, a drive control unit 140, and an HMI control unit 150. These components are realized by, for example, a hardware processor such as a central processing unit (CPU) executing the program (software) 74. Some or all of these components may be realized by hardware (circuit unit including a circuitry) such as a large scale integration (LSI), an application specific integrated circuit (ASIC), a field-programmable gate array (FPGA), and a graphics processing unit (GPU), or may be realized by software and hardware in cooperation. The program may be stored in the storage device 70 in advance, or may be stored in a detachable storage medium (non-transitory storage medium) such as a DVD or a CD-ROM and installed in the storage device 70 by inserting the storage medium into the drive device.

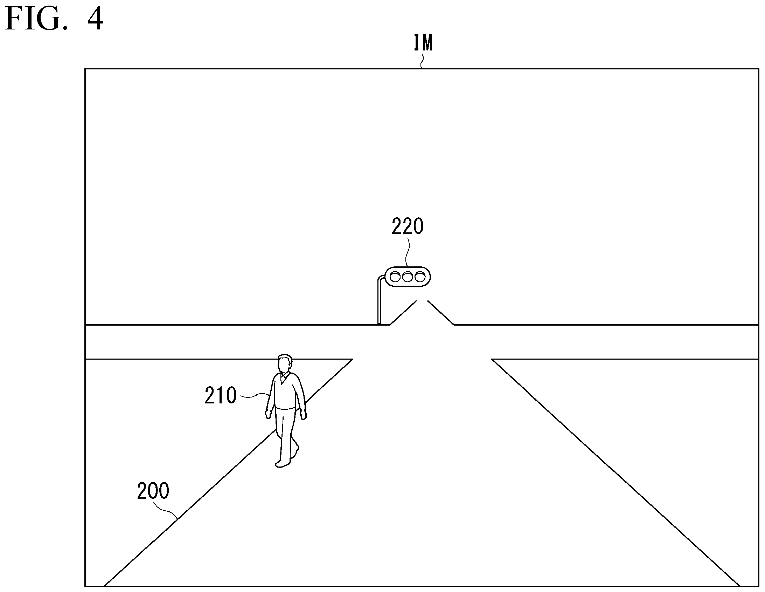

The recognition unit 120 recognizes a type, a position, or the like of at least an object on a side in a traveling direction of the mobile body 1 in accordance with information input from the external environment detection device 10. FIG. 4 is a view showing an example of an image IM captured by an external camera of the external environment detection device 10. The recognition unit 120 recognizes a lane boundary 200, a pedestrian 210, a state of a traffic light 220, other vehicles (not shown in the drawings), and the like. The lane boundary 200 includes a road lane line, a road shoulder, a step, a guard rail, and the like, and is an outer edge line of an area in which the mobile body 1 can travel. The recognition unit 120 recognizes positions and types of these objects in the image IM by inputting the image IM into a pre-trained model designed to recognize types of objects.

The target-trajectory generation unit 130, for example, projects the objects recognized on the image IM onto a virtual plane viewed from above, and generates a target trajectory along which the mobile body 1 should travel on the virtual plane. For example, the target-trajectory generation unit 130 generates a target trajectory such that the mobile body 1 travels along a center of the lane boundary in a width direction as a general rule, and avoids contact with pedestrians or other vehicles when they are present. At this time, the target-trajectory generation unit 130 sets a distribution of risk values, which are index values for avoiding contact around the lane boundary and objects, and generates a target trajectory to pass through points with lower risk values. The target trajectory may be generated with an accompanying speed element, and if a traffic light indicates that passage is not allowed, the target trajectory may be generated such that the mobile body 1 automatically comes to a stop. Note that, such acceleration/deceleration control may be performed by the drive control unit 140.

The drive control unit 140 controls the drive device 40 such that the mobile body 1 travels along the target trajectory. Since contents of the control by the drive control unit 140 are known, detailed description thereof will be omitted.

The HMI control unit 150 controls the HMI 30 to notify the occupant P of a state of the mobile body 1, and the like.

### [Control Based on Operation of First Operating Element]

When the first operating element OP1 is not operated, the target-trajectory generation unit 130 generates a target trajectory such that the mobile body 1 moves while maintaining the current road (in a so-called "following the road" manner) in accordance with the above-described guideline. When the first operating element OP1 is operated to the left or right, the target-trajectory generation unit 130 generates a target trajectory such that the mobile body 1 automatically turns to the left or right (turns to the right or left). Hereinafter, it is assumed that the first operating element OP1 is operated to the right. When the first operating element OP1 is operated to the right, the target-trajectory generation unit 130 searches for a road that intersects the road on which the mobile body 1 is currently traveling and that is closest to the mobile body 1 among roads that allows the mobile body 1 to turn right. A road that allows a right turn refers to a road that is not too close to the mobile body 1 (for example, a road whose distance from the mobile body 1 is greater than or equal to a predetermined distance in a longitudinal direction of the road currently being traveled). That is, if there is a sufficient clearance distance for a right turn and there is a road that intersects the road currently being traveled, the target-trajectory generation unit 130 generates a target trajectory to make the mobile body 1 turn right onto the intersecting road.

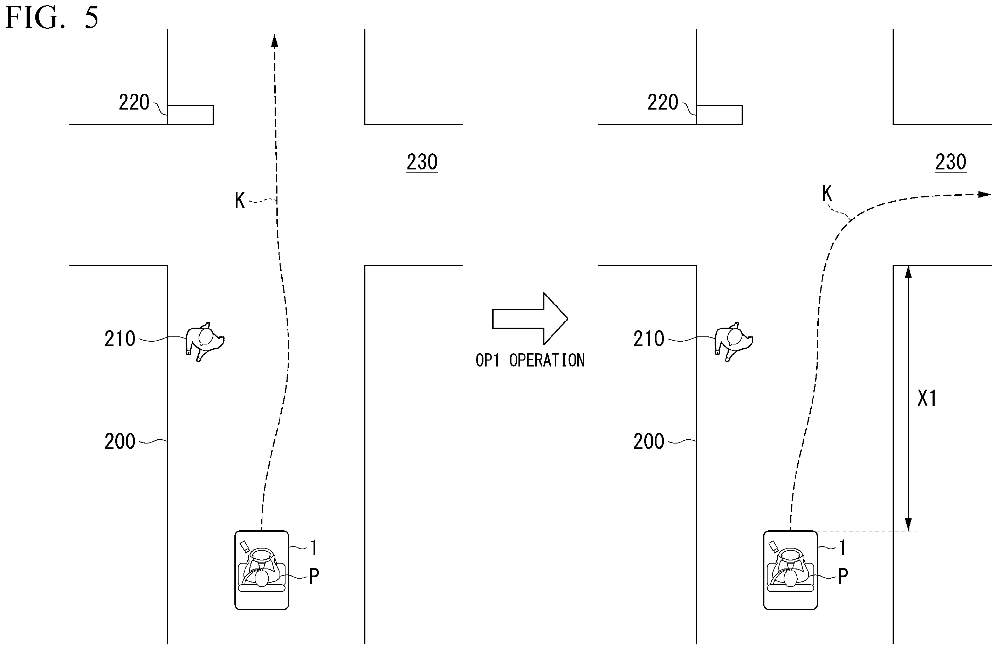

FIG. 5 is a view showing a target trajectory K before and after the first operating element OP1 is operated. As shown in the drawings, in response to an operation of the first operating element OP1, it is first ascertained that a distance X1 to the road 240 extending to the right is greater than or equal to the clearance distance, and if the distance X1 is greater than or equal to the clearance distance, the target trajectory K is changed to a path for entering the road 240. At this time, the target-trajectory generation unit 130 and the drive control unit 140 cause the mobile body 1 to travel along the target trajectory K while automatically performing deceleration required for turning right. Although FIG. 5 shows an example of control for a case of turning right, when the first operating element OP1 is operated to the left or right and there is no road along which a right or left turn can be made within the predetermined distance, the target-trajectory generation unit 130 may determine that a lane change has been instructed and cause the mobile body 1 to change lanes.

Further, since so-called manual steering is performed when a traveling direction of the mobile body 1 is determined by an operation of the second operating element OP2, the target-trajectory generation unit 130 stops the operation (the acceleration/deceleration control may still be performed automatically). If the second operating element OP2 is operated while the above-described mode A is being executed, it is interpreted as the occupant P indicating an intention to drive manually, and it may be configured such that the target-trajectory generation unit 130 stops the operation, and the operation mode transitions to the mode B in which the steering operation is performed manually.

According to the first embodiment described above, the first operating element OP1 is provided on the armrest, and the drive device 40 is controlled such that, in response to an operation made on the first operating element OP1 indicating either the left or right, the target trajectory K of the mobile body 1 to change a traveling direction is automatically generated based on a detected situation on a side in the traveling direction, and the mobile body 1 moves along the target trajectory K, thereby allowing the occupant to perform an operation of specifying the traveling direction in a comfortable posture.

### <Second Embodiment>

Hereinafter, a second embodiment will be described. In the first embodiment, a configuration in which there is one seat has been described, but a mobile body of the second embodiment includes two seats aligned in a direction intersecting a traveling direction of the mobile body, and an armrest on which a first operating element OP1 is provided is placed between the two seats.

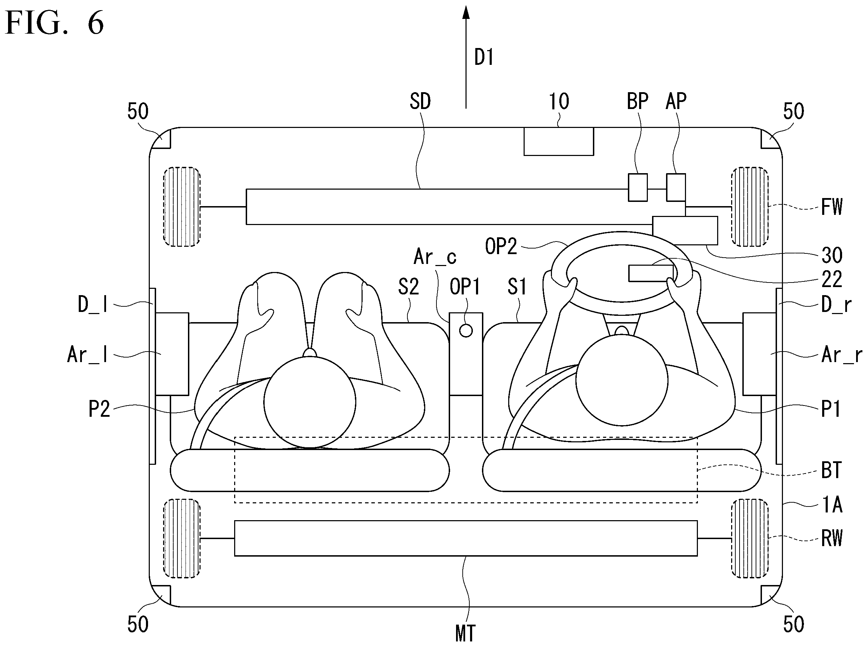

FIG. 6 is a perspective view of a mobile body 1A of the second embodiment from above. In the present drawing, some of the reference signs shown in FIG. 2 that are not essential are omitted. The mobile body 1A has two seats S1 and S2, and has a central armrest Ar_c therebetween. The first operating element OP1 is provided on the central armrest Ar_c. Note that, in the drawings, the central armrest Ar_c is shown as an integrated unit shared by occupants P1 and P2, but the central armrest Ar_c may be separated into a portion for the occupant P1 and a portion for the occupant P2, in which case the first operating element OP1 is provided in the portion for the occupant P1 in the central armrest Ar_c.

According to the second embodiment described above, it is possible to achieve the same effects as in the first embodiment. Also, the first operating element OP1 is provided at a position that does not interfere with occupant's getting in and out, and this is similar to the first embodiment in that occupant's getting in and out is not obstructed.

Although embodiments for implementing the present invention have been described above, the present invention is not limited to these embodiments at all, and various modifications and substitutions can be made within a range not departing from the gist of the present invention.

### REFERENCE SIGNS LIST

10 External environment detection device
40 Drive device
100 Control device
120 Recognition unit
130 Target-trajectory generation unit
140 Drive control unit
OP1 First operating element
OP2 Second operating element
Ar_l Left armrest
Ar_r Right armrest
Ar_c Central armrest
D_l Left door
D_r Right door

## Claims

1. A mobile body allowing an occupant to board, comprising:
a drive device configured to move the mobile body;
a control device configured to control the drive device;
a detection device configured to acquire at least a situation on a side in a traveling direction of the mobile body; and
a first operating element provided on an armrest of the mobile body, wherein
in response to an operation made on the first operating element indicating either the left or right, the control device is configured to control the drive device so as to automatically generate a target trajectory of the mobile body to change the traveling direction based on a situation on a side in the traveling direction and so as to cause the mobile body to move along the target trajectory.

2. The mobile body according to claim 1, wherein
as a target trajectory of changing a traveling direction of the mobile body, the control device is configured to generate a target trajectory of causing the mobile body to turn right or left or change a lane.

3. The mobile body according to claim 1, wherein
the first operating element is provided on an armrest placed on an inner side of a door provided on a side surface of the mobile body.

4. The mobile body according to claim 3, wherein
of two doors provided on left and right side surfaces of the mobile body, the first operating element is provided on the armrest placed on an inner side of a door on a side opposite to a side along which the mobile body is legally determined to travel.

5. The mobile body according to claim 3, wherein
the first operating element is provided at a position that does not overlap an opening/closing operating element configured to open and close the door in a side view.

6. The mobile body according to claim 1, comprising
two seats aligned in a direction intersecting a traveling direction of the mobile body, wherein
the armrest is provided between the two seats.

7. The mobile body according to claim 1, further comprising
a second operating element configured to manually operate a traveling direction of the mobile body, wherein
the first operating element is provided behind the second operating element in a traveling direction of the mobile body.
